Europäisches Patentamt

European Patent Office

Office européen des brevets

(19)

(11) Publication number : **0 374 604 B1**

# EUROPEAN PATENT SPECIFICATION

(12)

(45) Date of publication of patent specification :
13.12.95 Bulletin 95/50

(51) Int. Cl.$^6$ : **G10L 9/16**, G06K 9/64

(21) Application number : **89122584.9**

(22) Date of filing : **07.12.89**

(54) Pattern recognition system and method

(30) Priority : **20.12.88 JP 321141/88**

(43) Date of publication of application :
**27.06.90 Bulletin 90/26**

(45) Publication of the grant of the patent :
**13.12.95 Bulletin 95/50**

(84) Designated Contracting States :
**DE GB IT**

(56) References cited :
**PROCEEDINGS OF THE 9TH INTERNATIONAL
CONFERENCE ON PATTERN RECOGNITION
ROME, November 14-17, 1988, IEEE COM-
PUTER SOCIETY PRESS, Washington D.C.,
US, pp. 1225-1229; H. SEGAWA et al.: 'A Simil-
arity Value Transformation Method for Prob-
abilistic Scoring'**

(73) Proprietor : **KABUSHIKI KAISHA TOSHIBA
72, Horikawa-cho,
Saiwai-ku
Kawasaki-shi, Kanagawa-ken 210, Tokyo (JP)**

(72) Inventor : **Nitta, Tsuneo Intellectual Property
Division
K.K. Toshiba
1-1 Shibaura
1-chome
Minato-ku
Tokyo 105 (JP)**

(74) Representative : **Henkel, Feiler, Hänzel &
Partner
Möhlstrasse 37
D-81675 München (DE)**

EP 0 374 604 B1

## Description

The present invention relates to a pattern recognition system and method, which can accurately recognize an input pattern such as speech, character, figure, and the like and, more particularly, to an improvement in a partial space method.

In recent years, studies about pattern recognition processing for speech, character, figure, and the like have been made, and the pattern recognition processing has been receiving a great deal of attention as an important technique for realizing a natural man-machine interface.

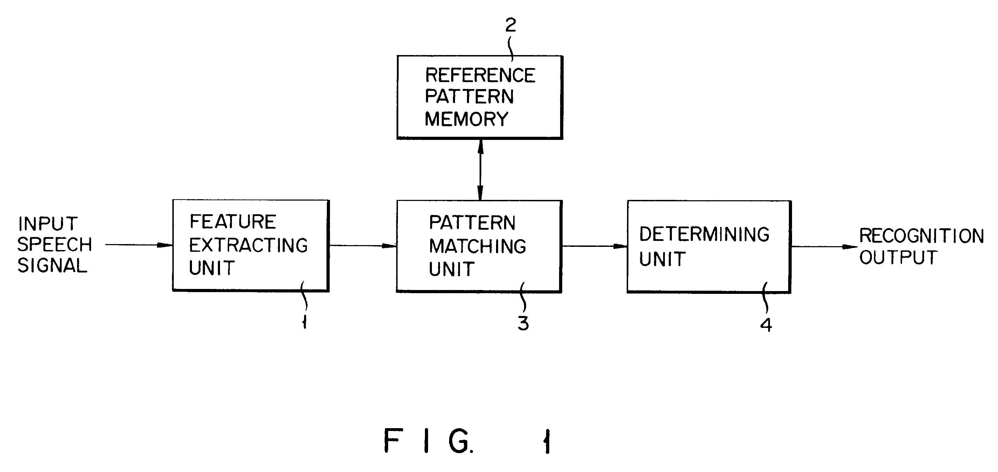

A pattern recognition apparatus for executing pattern recognition processing of this type basically has an arrangement shown in Fig. 1. The respective units perform the following processing.

1) A feature extracting unit 1 analyzes an input pattern to obtain its feature pattern.

2) By referring to a reference pattern memory 2 which stores reference patterns obtained in units of categories of patterns to be recognized as dictionaries, similarities or distances between the reference pattern dictionaries and the feature pattern are computed by a pattern matching unit 3.

3) The collation results are determined by a determining unit 4 to obtain a recognition result of the input pattern. Note that the determining unit 4 obtains a category name of the reference pattern which has the highest similarity value (or the smallest distance value) with the input pattern as a recognition result or a recognition candidate for the input pattern. When the input pattern is a speech waveform, the feature extracting unit 1 performs Band Pass Filter (BPF) analysis or Linear Prediction Coding (LPC) analysis of the input speech, and then detects a speech interval, thus obtaining acoustic analysis data in this speech interval as an input pattern.

When the input pattern is a character image, the feature extracting unit 1 quantizes the input character image, and then extracts a character portion, thus obtaining feature data of the character pattern as an input pattern.

As a method in the pattern recognition processing, a subspace method is known. Pattern recognition using the subspace method is described in, e.g., U.S.P. No. 4,624,011 (Watanabe et. al.)

In the subspace method, as reference pattern dictionaries of categories, dictionaries ($\phi_{(K,m)}$; K is category name, and $\underline{m}$ is the number of an orthogonal axis; m = 1, 2,..., M) which are orthogonalized in advance by KL expansion in units of categories are created as orthogonalized dictionary sets. Similarities S(K) between the dictionaries and an input pattern (F) are computed according to the following equation to perform pattern matching processing:

$$S_{(K)} = \sum_{m=1}^{M} (F \cdot \phi_{(K,m)})^2 / \|F\| \qquad \dots (1)$$

where ($\cdot$) indicates an inner product, and $\|\ \|$ indicates a norm.

The pattern matching method according to the subspace method is widely used in pattern recognition since it can relatively easily obtain an accurate recognition result.

In the conventional pattern recognition processing using the subspace method, as shown in the above-mentioned equation, the inner products of the input pattern (F) and the orthogonal axes ($\phi_{(K,m)}$) of the orthogonalized dictionary sets are merely accumulated, and the overall feature of the input pattern is evaluated using the accumulation value. In other words, the pattern recognition is performed not by using the individual inner products obtained between the input pattern and the orthogonal axes but by using the accumulation value representing the overall feature. For this reason, when an inner product with respect to a given orthogonal axis takes a large value, which cannot be obtained with a correct pattern, due to noise, the accumulation result of the inner products tends to become a value larger than that of the inner products for the correct pattern. When pattern matching processing is performed using the subspace method of this type, a determination error (recognition error) caused by a category other than an object to be recognized and various noise components tends to occur.

In order to solve this problem, recently, pattern matching processing using a multi-layer neural network is receiving a great deal of attention. A nonlinear discriminant function is realized by the neural network, for sequentially transmitting neurons carrying information, to extract feature data of an input pattern. The neural network of this type poses the problem of how to determine a set of coefficients for defining the way of combining outputs from lower-order layers. As an algorithm for obtaining these coefficients, a back propagation (BP) algorithm is known (NATURE Vol. 323 9, pp. 553 - 536 (1986, Oct) Learning representations by back-propagation errors). Various reports announced that pattern matching processing could be accurately executed upon application of the BP algorithm.

However, when a neural network is used, an enormous amount of computations for determining coefficients of each layer must be performed, and a load of computation processing is very large.

It is an object of the present invention to provide a pattern recognition system and method which can reduce a load on computation processing by utilizing advantages of a neural network.

In order to achieve the above object, according to a first aspect of the present invention, a pattern recognition system comprises: orthogonalized dictionary means for storing a plurality of reference patterns whose categories are known; inner product computing means for computing inner products of an input pattern whose category is unknown and the plurality of reference patterns which are stored in the orthogonalized dictionary means and whose categories are known; converting means for nonlinearly converting the inner products, which are computed by the inner product computing means, in accordance with a positive-negative symmetrical nonlinear function; evaluation value computing means for computing evaluation values on the basis of the nonlinearly converted values by the converting means and coefficients which are preset in units of categories; comparing means for comparing the evaluation values obtained by the evaluation value computing means in units of categories with each other; and discriminating means for discriminating a category to which the input pattern belongs on the basis of the comparison results of the comparing means.

According to a second aspect of the present invention, a pattern recognition method comprises the steps performed by a computer of: computing inner products of an input pattern whose category is unknown and orthogonalized dictionary sets of a plurality of reference patterns whose categories are known; nonlinearly converting the inner products, which are computed in the computing step, in accordance with a positive-negative symmetrical nonlinear function; computing evaluation values on the basis of the nonlinearly converted values by the converting step and coefficients which are preset in units of categories; comparing the evaluation values obtained by the evaluation value computing step in units of categories with each other; and discriminating a category to which the input pattern belongs on the basis of the comparison results of the comparing step.

This invention can be more fully understood from the following detailed description when taken in conjunction with the accompanying drawings, in which:

Fig. 1 is a block diagram of a typical pattern recognition apparatus;

Figs. 2A through 2D show patterns of orthogonal vectors obtained by a KL expansion;

Fig. 3 is a chart showing a nonlinear function normally used in a neural network;

Fig. 4 is a chart showing a positive-negative symmetrical nonlinear function introduced in the present invention;

Fig. 5 is a block diagram showing the first embodiment of a pattern recognition system according to the present invention;

Fig. 6 shows a neural network of the pattern recognition system shown in Fig. 5; and

Fig. 7 is a block diagram showing the second embodiment of the present invention.

According to a pattern recognition system and method of the present invention, inner products of an input pattern and orthogonalized dictionary sets are nonlinearly converted by a positive-negative symmetrical nonlinear function, and the converted values are subjected to predetermined computation processing using predetermined coefficients in units of categories. As a result, a variation in input pattern can be effectively absorbed by simple computation processing, and the input pattern can be accurately recognized.

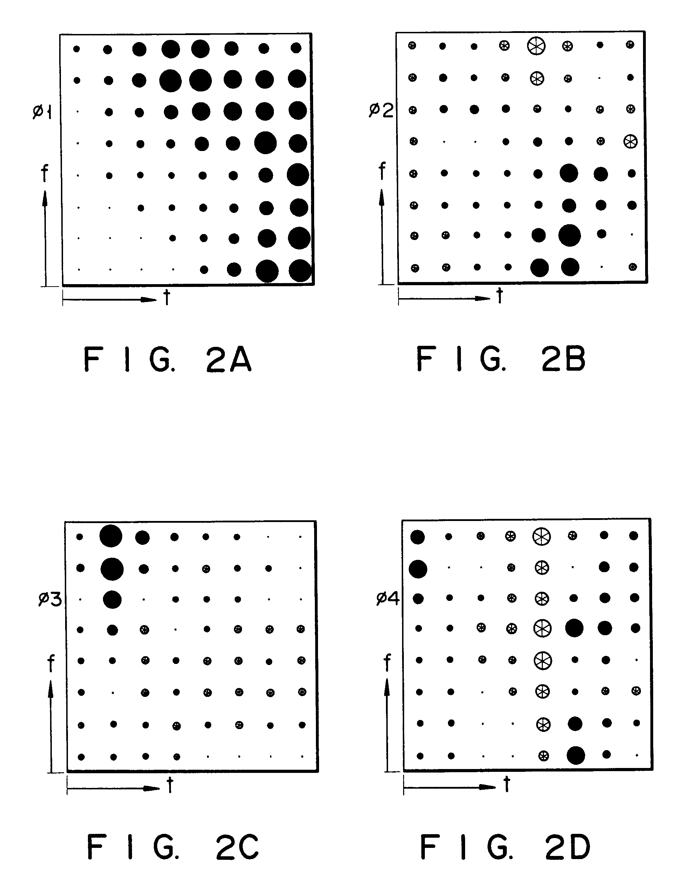

For example, eigenvectors of a speech pattern are obtained as shown in Figs. 2A through 2D. Eigenvectors $\phi_1$, $\phi_2$, $\phi_3$, and $\phi_4$ of first through fourth axes shown in Figs. 2A through 2D are those of orthogonalized dictionary patterns (eigenvectors) obtained up to a tenth axis from speech patterns of a monosyllable speech/cho/([tʃo]) pronounced by 300 speakers by the KL expansion. In Figs. 2A through 2D, ● represents a positive vector value, and ⊗ represents a negative vector value.

The eigenvector $\phi_1$ of the first axis expresses a feature (vector) of an average input pattern. However, since a plosive portion of /cho/([tʃo]) is obscured, the input pattern cannot be recognized to be distinguished from /sho/([ʃo]). The eigenvector $\phi_2$ of the second axis mainly expresses a displacement in a frequency direction, and the eigenvector $\phi_3$ of the third axis mainly expresses a plosive portion of an affricate/cho/([tʃo]). Therefore, when the eigenvector of the third axis is referred, the input pattern can be recognized to be distinguished from /sho/([ʃo]) described above. Furthermore, the eigenvector $\phi_4$ of the fourth axis mainly expresses a displacement in a time direction.

In this example, eigenvectors of fifth and subsequent axes are not illustrated. However, information carried by each eigenvector is not so clear like the eigenvectors of the first through fourth axes.

In this manner, the eigenvectors $\phi_1$, $\phi_2$, $\phi_3$, and $\phi_4$ (orthogonalized patterns) constituting an orthogonalized dictionary obtained by the KL expansion well express a variation in a speech (or character, or figure) pattern. This resembles feature extraction in lower-order layers in a multi-layer neural network.

Therefore, based on this point of view, a process of computing an inner product of an input pattern and an orthogonal vector is considered as a first (lowermost) layer in the neural network in the present invention, and a neural network for receiving the outputs from the first layer is constituted to execute pattern matching processing. As a result, coefficient computations of inputs of a large number of dimensions at the lowermost layer can be omitted. More specifically, the first layer portion is separated from the BP algorithm, and only a higher-order layer portion is independently computed.

As a result, of the neural network, the number of layers for which coefficients are computed by the BP algorithm can be reduced to 1 or 2. Therefore, pattern matching processing with a considerably reduced computation volume can be realized.

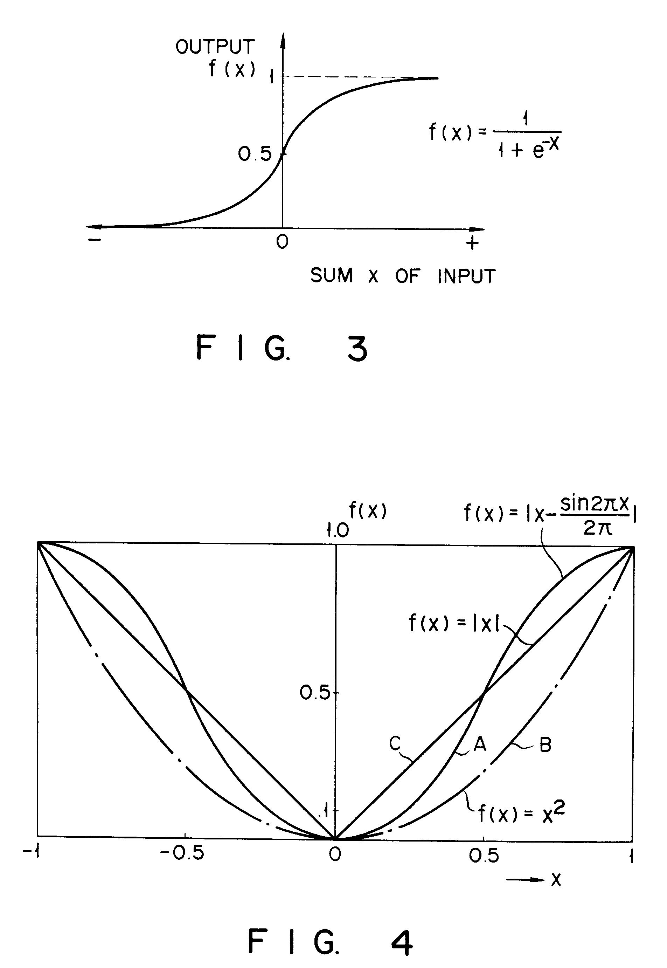

A process of combining outputs from a lower-order layer by a nonlinear conversion is provided between adjacent layers of the neural network. As a function of executing the nonlinear conversion, a sigmoid function expressed by the following formula (Fig. 3) is often used:

$$f_{(x)} = 1/(1 + e^{-x})$$

where $\underline{x}$ is the total sum of inputs. The inner products of the input pattern and the orthogonal vectors (eigenvectors $\phi_1$, $\phi_2$, $\phi_3$, and $\phi_4$) take positive/negative values, and the magnitude of the absolute value of each inner product represents a degree of contribution to the corresponding axis. Therefore, there is a new problem that the nonlinear function such as the sigmoid function cannot be directly applied.

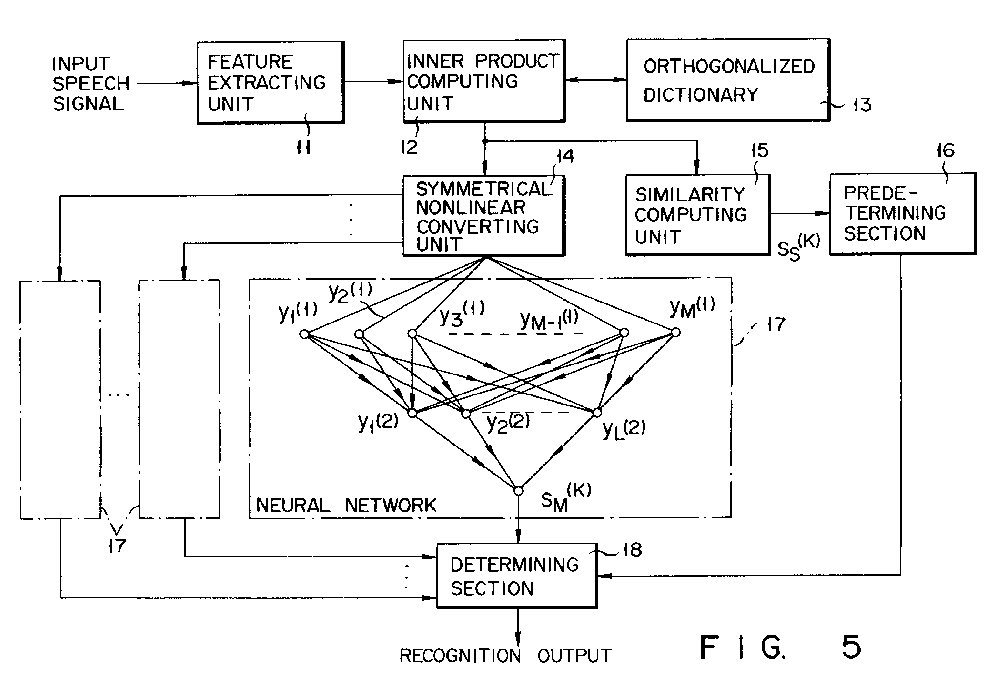

In the present invention, a positive-negative symmetrical nonlinear function shown in Fig. 4 is adopted to perform the nonlinear conversion of the inner products.

In Fig. 4, a function A is a positive-negative symmetrical function having characteristics similar to the sigmoid function within the range of $| x | \leqq 1$, and is given by:

$$A; \quad f_{(x)} = x - \left| \frac{\sin 2\pi x}{2\pi} \right|$$

A function B shown in Fig. 4 is a quadratic function given by:

$$B; f_{(x)} = x^2$$

Furthermore, a function C exhibits linear characteristics in positive and negative regions, and is given by:

$$C; f_{(x)} = | x |$$

The inner products of the input pattern and the orthogonal vectors are nonlinearly converted using the positive-negative symmetrical nonlinear functions A, B, and C, thus obtaining a means for transferring the outputs to the higher-order layers of the neural network. Therefore, high-performance pattern recognition processing can be realized by a combination of the subspace method and the neural network, each of which compensates for the drawbacks of the other.

When the nonlinear conversion described above is performed in practice, the absolute values of inner products of an input pattern and orthogonal vectors are computed, and a positive-side nonlinear conversion shown in Fig. 4 may be performed for the absolute values.

After the inner products of an input pattern and the orthogonal axes are nonlinearly converted by the symmetrical nonlinear function, these values G = (S1, S2,..., SM) may be input to a statistical discriminant function in place of the neural network. In this case, for example, a Bayes decision rule given by the following equation is utilized to discriminate the input pattern.

$$L_{(K)} = \frac{\exp\{-(1/2)\cdot(G - \mu_K)TR_K^{-1}(G - \mu_K)\}}{(2\pi)^{M/2}\cdot| R_K |^{1/2}} \quad (2)$$

where $\mu_K$ and $R_K$ are respectively the mean vector and the covariance matrix of an input pattern G obtained from learning data. T indicates transposition, and $R_K^{-1}$ and $| R_K |$ are respectively the inverse matrix of the covariance matrix $R_K$ and the value of the determinant.

In the Bayes decision, values given by equation (2) are computed in units of categories, and a category providing a maximum value is discriminated as an recognition result. When a Maharanobis distance is used as a simplified method of the Bayes decision, pattern recognition processing may be performed according to the following equation:

$$M_{(K)} = (G - \mu_K)TR_K^{-1}(G - \mu_K) \quad (3)$$

When the statistical discriminant function is used in place of the neural network, the same effect can be obtained.

Fig. 5 is a block diagram when pattern recognition of the present invention is applied to speech recognition.

Input speech is input to a feature extracting unit 11. The feature extracting unit 11 samples the input speech at 12 kHz to analog-to-digital convert the input speech into 12-bit digital data, and computes its power and LPC analysis parameters. This computation processing is performed under conditions that a window length is 24 msec, a frame period is 8 msec, an order of LPC analysis is 16, and the number of terms of the LPC mel-cepstrum is 16. Thereafter, the feature extracting unit 11 detects an input speech interval, and extracts power and LPC analysis parameter in this interval as a speech feature (input pattern). The unit 11 then supplies the extracted feature to an inner product computing unit 12.

The inner product computing unit 12 executes inner product computations of the input pattern obtained as described above and orthogonalized dictionary sets which are prepared in units of categories to be recognized and are stored in an orthogonalized dictionary memory 13. The inner products between the input pattern and the orthogonalized dictionary sets are supplied to a symmetrical nonlinear converting unit 14 and a similarity computing unit 15 based on the partial space method.

The symmetrical nonlinear converting unit 14 nonlinearly converts the inner products in accordance with the positive-negative symmetrical nonlinear function shown in Fig. 4, and supplies the converted values to a neural network unit 17. The similarity computing unit 15 executes similarity computation processing by the subspace method given by equation (1) for the inner products. The similarity computation result obtained by the similarity computing unit 15 is supplied to a predetermining section 16. The predetermining section 16 determines whether the value from the similarity computing unit 15 is to be output as a recognition result or is to be discriminated by the neural network unit 17.

The neural network is provided with coefficients shown in Fig. 5 in the same manner as in the orthogonalized dictionary sets. These coefficients are computed in advance in units of categories to be recognized on the basis of learning data using the above-mentioned BP algorithm.

The neural network unit 17 is provided in units of categories, as shown in Fig. 5, and receives the nonlinearly converted values G (= (S1, S2,..., SM); M is the number of orthogonal axes) to compute sums of products with the coefficients along connecting lines shown in Fig. 5. The unit 17 combines the sums in units of nodes, and executes the nonlinear conversion based on the sigmoid function to obtain signals y1, y2,..., yL. Similarly, the unit 17 computes sums of products between these signals and the coefficients, and executes nonlinear conversion. The unit 17 then combines the converted values to obtain an output associated with a given category. Of neural network outputs for all the categories obtained in this manner, a category which provides a maximum output is discriminated as a recognition result, thereby recognizing the input pattern.

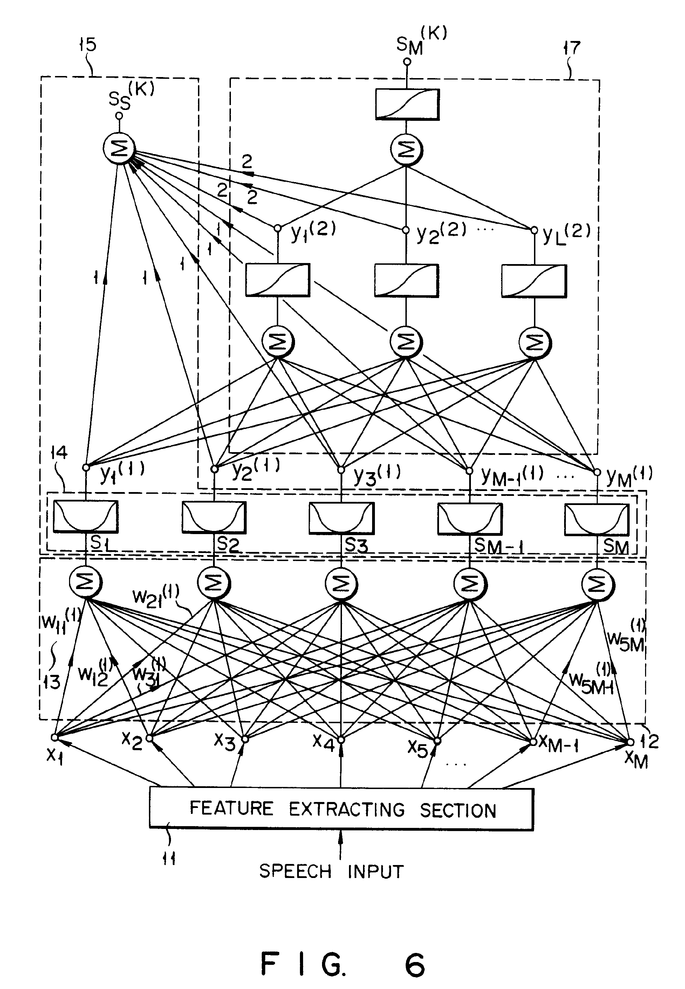

Fig. 6 shows a neural network of the speech recognition system shown in Fig. 5. The same reference numerals in the neural network in Fig. 6 denote the same parts as in Fig. 5.

Input patterns output from the feature extracting unit 11 are subjected to an inner product computation $(F \cdot \phi_{(K,m)})$ given by equation (1) and are added by the inner product computing unit 12. The sum output values from the inner product computing unit 12 as the inner products are nonlinearly converted by the symmetrical nonlinear converting unit 14. The neural network unit 17 further computes inner products of weighting coefficients and the output values $y_1^{(1)}$, $y_2^{(1)}$, ..., $y_M$ from the symmetrical nonlinear converting unit 14 in units of categories, computes a total sum of the inner products, and then nonlinearly converts the total sum according to the sigmoid function, thus obtaining $S_M^{(K)}$.

The similarity computing unit 15 computes a total sum of values obtained by multiplying the output values $y_1^{(1)}$, $y_2^{(1)}$, ... $y_M^{(1)}$ from the symmetrical nonlinear converting unit 14 with "1" and values obtained by multiplying the output values $y_1^{(1)}$, $y_2^{(1)}$,..., $y_M^{(1)}$ with "2", thus obtaining an output $S_S^{(K)}$.

$S_S^{(K)}$ corresponds to a score of the subspace method alone. $S_M^{(K)}$ can be regarded as a score of the neural network alone when projective components to each subspace are input to the neural network. A determining section 18 performs primary determination based on higher-order scores $(S_{S1}, S_{S2},...)$ of $S_S^{(K)}$. As a result, when a plurality of candidates are obtained, the recognition result is determined based on $S_M^{(K)}$.

In this embodiment, neural network computations for all the categories are performed for an input. However, in a practical application, certain recognition candidates may be selected by utilizing the output from the predetermining section 16, and only higher-order candidates may be subjected to computations by the neural network unit 17. The number of layers of the neural network may be changed within the spirit and scope of the invention.

In this manner, in the pattern recognition system and method of the present invention, inner products between an input pattern and the orthogonalized dictionary sets are computed and are nonlinearly converted, and the converted values are supplied to the neural network unit 17 to execute pattern recognition processing. According to the system and method of the present invention, accurate recognition processing can be realized by the inner product computations and nonlinear conversion without performing complicated coefficient computations in earlier stages in the neural network. As a result, an input pattern can be easily and effectively recognized with high accuracy using the neural network in which coefficient computations are simplified, while drawbacks of the subspace method in terms of various noise components are effectively eliminated.

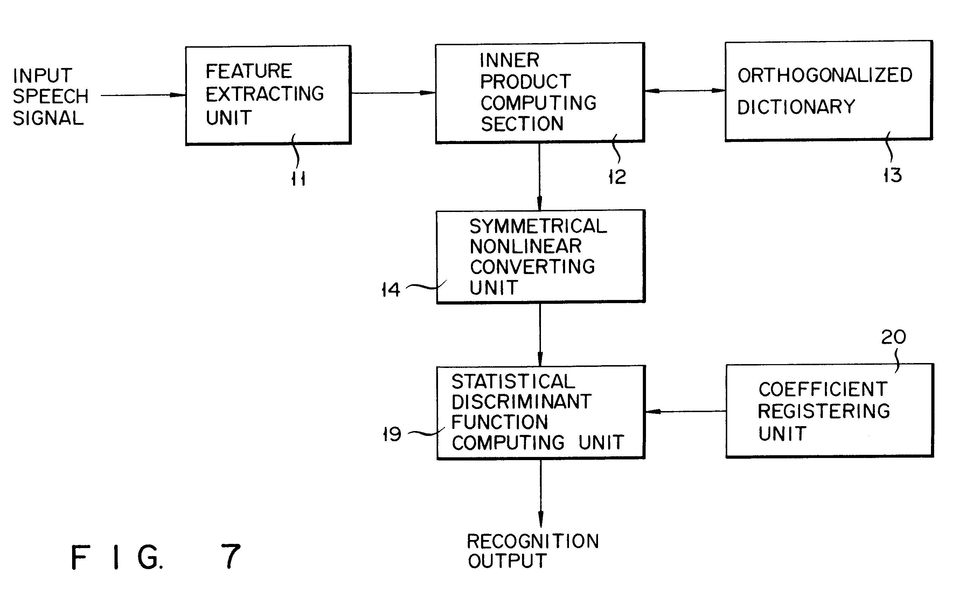

Fig. 7 is a block diagram showing the second embodiment of a pattern recognition system according to the present invention. Note that the same reference numerals in Fig. 7 denote the same parts as in Fig. 5, and a detailed description thereof will be omitted. In this embodiment, pattern recognition processing is executed using the statistical discriminant function described above in place of the neural network. In this embodiment, input speech is analyzed by a feature extracting unit 11 as in the first embodiment to obtain its power and LPC analysis parameter, and a speech interval is detected to extract a speech feature (input pattern). An inner product computing section 12 computes inner products between the input pattern and orthogonalized dictionaries prepared in units of categories and stored in an orthogonalized dictionary memory 13. The inner products are nonlinearly converted by a symmetrical nonlinear converting unit 14. Thereafter, a statistical discriminant function computing unit 19 performs predetermined coefficient computations using the nonlinearly converted values.

The statistical discriminant function computing unit 19 executes coefficient computation processing by referring to a coefficient registering unit 20 which stores mean vectors and covariance matrices obtained from learning data in units of categories in the same manner as the orthogonalized dictionary sets.

More specifically, the statistical discriminant function computing unit 19 receives the nonlinearly converted values G (= (S1, S2,..., SM); M is the number of orthogonal axes), and executes coefficient computation processing in accordance with equation (2) or (3) between the inputs and coefficients given from the coefficient registering unit 20, thus obtaining evaluation values. Of the evaluation values (outputs) computed in this manner, a category which provides a maximum output of all the categories (in the Bayes decision, a minimum value for the Maharanobis distance) is discriminated as a recognition result for the input pattern, thus recognizing the input pattern.

In this case, certain candidates may be selected by utilizing an output from a predetermining section like in the first embodiment without computing the statistical discriminant function for all the categories, and higher-order candidates may be subjected to discriminant function computations.

The present invention is not limited to the above embodiments.

For example, the number of axis of orthogonalized dictionaries used in inner product computations, the number of categories to be recognized, and the number of layers constituting the neural network may be determined in accordance with specifications of pattern recognition. The nonlinear function for nonlinearly converting inner products is not limited to the one described above.

## Claims

1. A pattern recognition system comprising:

    orthogonalized dictionary means for storing a plurality of reference patterns whose categories are known;

    inner product computing means for computing inner products of an input pattern whose category is unknown and the plurality of reference patterns which are stored in said orthogonalized dictionary means and whose categories are known;

    converting means for nonlinearly converting the inner products, which are computed by said inner product computing means, in accordance with a positive-negative symmetrical nonlinear function;

    evaluation value computing means for computing evaluation values on the basis of the nonlinearly converted values by said converting means and coefficients which are preset in units of categories;

    comparing means for comparing the evaluation values obtained by said evaluation value computing means in units of categories with each other; and

    discriminating means for discriminating a category to which the input pattern belongs on the basis of comparison results of said comparing means.

2. A system according to claim 1, characterized in that said evaluation value computing means computes the evaluation values using a neural network.

3. A system according to claim 1, characterized in that said evaluation value computing means computes the evaluation values using a statistical discriminant function.

4. A system according to claim 2, characterized in that said neural network has a mulyi-layer structure, and computations at a lowermost layer are replaced with inner product computations between the input pattern and dictionaries orthogonalized by KL expansion in units of categories.

5. A system according to claim 3, characterized in that said evaluation value computing means computes the following equation on the basis of a mean vector and a covariance matrix obtained in advance from learning data in units of categories, and said discriminating means discriminates a maximum evaluation value as a recognition result using a Bayes decision rule:

$$L_{(K)} = \frac{\exp\{-(1/2)\cdot(G - \mu_K)TR_K^{-1}(G - \mu_K)\}}{(2\pi)^{M/2}\cdot\mid R_K\mid^{1/2}}$$

where $\mu_K$ and $R_K$ are respectively the mean vector and the covariance matrix of an input pattern G obtained from learning data, T indicates transposition, and $R_K^{-1}$ and $\mid R_K\mid$ are respectively an inverse matrix of the covariance matrix $R_K$ and a value of a determinant.

6. A system according to claim 3, characterized in that said evaluation value computing means computes the following equation on the basis of a mean vector and a covariance matrix obtained in advance from learning data in units of categories, and said discriminating means discriminates a category having a minimum distance value as a recognition result using a Maharanobis distance:

$$M_{(K)} = (G - \mu_K)TR_K^{-1}(G - \mu_K)$$

where $\mu K$ and $RK$ are respectively the mean vector and the covariance matrix of an input pattern G obtained from learning data, T indicates transposition, and $R_K^{-1}$ is an inverse matrix of the covariance matrix $R_K$.

7. A pattern recognition method comprising the steps performed by a computer of:

computing inner products of an input pattern whose category is unknown and orthogonalized dictionary sets of a plurality of reference patterns whose categories are known;

nonlinearly converting the inner products, which are computed in the computing step, in accordance with a positive-negative symmetrical nonlinear function;

computing evaluation values on the basis of the nonlinearly converted values by the converting step and coefficients which are preset in units of categories;

comparing the evaluation values obtained by the evaluation value computing step in units of categories with each other; and

discriminating a category to which the input pattern belongs on the basis of comparison results of the comparing step.

8. A method according to claim 7, characterized in that the evaluation value computing step includes the step of computing the evaluation values using a neural network.

9. A method according to claim 7, characterized in that the evaluation value computing step includes the step of computing the evaluation values using a statistical discriminant function.

10. A method according to claim 8, characterized in that said neural network has a multi-layer structure, and computations at a lowermost layer are replaced with inner product computations between the input pattern and dictionaries orthogonalized by KL expansion in units of categories.

11. A method according to claim 9, characterized in that the evaluation value computing step includes the step of computing the following equation on the basis of a mean vector and a covariance matrix obtained in advance from learning data in units of categories, and the discriminating step includes the step of discriminating a maximum evaluation value as a recognition result using a Bayes decision rule:

$$L_{(K)} = \frac{\exp\{-(1/2)\cdot(G - \mu_K)TR_K^{-1}(G - \mu_K)\}}{(2\pi)^{M/2}\cdot\mid R_K\mid^{1/2}}$$

where $\mu_K$ and $R_K$ are respectively the mean vector and the covariance matrix of an input pattern G obtained from learning data, T indicates transposition, and $R_K^{-1}$ and $\mid R_K\mid$ are respectively an inverse matrix of the covariance matrix $R_K$ and a value of a determinant.

12. A method according to claim 9, characterized in that the evaluation value computing step includes the step of computing the following equation on the basis of a mean vector and a covariance matrix obtained in advance from learning data in units of categories, and the discriminating step includes the step of discriminating a category having a minimum distance value as a recognition result using a Maharanobis distance:

$$M_{(K)} = (G - \mu_K)TR_K^{-1}(G - \mu_K)$$

where $\mu_K$ and $R_K$ are respectively the mean vector and the covariance matrix of an input pattern G obtained from learning data, T indicates transposition, and $R_K^{-1}$ is an inverse matrix of the covariance matrix $R_K$.

**Patentansprüche**

1. Mustererkennungssystem mit:
einer orthogonalisierten Wörterbucheinrichtung zum Speichern einer Vielzahl von Bezugsmustern, deren Kategorien bekannt sind,
einer Innenprodukt-Recheneinrichtung zum Berechnen innerer Produkte eines Eingangsmusters, dessen Kategorie unbekannt ist, und der Vielzahl von Bezugsmustern, die in der orthogonalisierten Wörterbucheinrichtung gespeichert sind und deren Kategorien bekannt sind,
einer Umsetzungseinrichtung zum nichtlinearen Umsetzen der inneren Produkte, die durch die Innenprodukt-Recheneinrichtung berechnet sind, gemäß einer positiv-negativ-symmetrischen nichtlinearen Funktion,
einer Bewertungswert-Recheneinrichtung zum Berechnen von Bewertungswerten auf der Grundlage der durch die Umsetzungseinrichtung nichtlinear umgesetzten Werte und Koeffizienten, die in Einheiten von Kategorien voreingestellt sind,
einer Vergleichseinrichtung zum Vergleichen der Bewertungswerte, die von der Bewertungswert-Recheneinrichtung erhalten sind, in Einheiten von Kategorien miteinander, und
einer Diskriminiereinrichtung zum Diskriminieren einer Kategorie, zu der das Eingangsmuster gehört, auf der Grundlage der Vergleichsergebnisse der Vergleichseinrichtung.

2. System nach Anspruch 1, dadurch gekennzeichnet, daß die Bewertungswert-Recheneinrichtung die Bewertungswerte mittels eines neuralen Netzwerkes berechnet.

3. System nach Anspruch 1, dadurch gekennzeichnet, daß die Bewertungswert-Recheneinrichtung die Bewertungswerte mittels einer statistischen Diskriminantenfunktion berechnet.

4. System nach Anspruch 2, dadurch gekennzeichnet, daß das neurale Netzwerk eine Mehrschichtstruktur hat und Berechnungen an einer untersten Schicht mit Innenproduktberechnungen zwischen dem Eingangsmuster und Wörterbüchern, die durch KL-Expansion in Einheiten von Kategorien orthogonalisiert sind, ersetzt sind.

5. System nach Anspruch 3, dadurch gekennzeichnet, daß die Bewertungswert-Recheneinrichtung die folgende Gleichung auf der Grundlage eines mittleren Vektors und einer Kovarianz-Matrix, die zuvor aus Lerndaten in Einheiten von Kategorien erhalten ist, berechnet und die Diskriminiereinrichtung einen maximalen Bewertungswert als ein Erkennungsergebnis mittels einer Bayes-Entscheidungsregel diskriminiert:

$$L_{(K)} = \frac{\exp\{-(1/2) \cdot (G - \mu_K)^T R_K^{-1} (G - \mu_K)\}}{(2\pi)^{M/2} \cdot |R_K|^{1/2}}$$

wobei $\mu_K$ und $R_K$ jeweils den mittleren Vektor und die Kovarianz-Matrix eines aus Lerndaten erhaltenen Eingangsmusters G bedeuten, T eine Transposition oder Vertauschung anzeigt und $R_K^{-1}$ und $|R_K|$ jeweils eine inverse Matrix der Kovarianz-Matrix $R_K$ und einen Wert einer Determinanten bedeuten.

6. System nach Anspruch 3, dadurch gekennzeichnet, daß die Bewertungswert-Recheneinrichtung die folgende Gleichung auf der Grundlage eines mittleren Vektors und einer zuvor aus Lerndaten in Einheiten von Kategorien erhaltenen Kovarianz-Matrix berechnet, und daß die Diskriminiereinrichtung eine Kategorie mit einem Mindestabstandswert als ein Erkennungsergebnis mittels eines Maharanobis-Abstands diskriminiert:

$$M_{(K)} = (G - \mu_K)^T R_K^{-1} (G - \mu_K)$$

wobei $\mu_K$ und $R_K$ jeweils den mittleren Vektor und die Kovarianz-Matrix eines aus Lerndaten erhaltenen Eingangsmusters G bedeuten, T eine Transposition oder Vertauschung anzeigt und $R_K^{-1}$ eine inverse Matrix der Kovarianz-Matrix $R_K$ ist.

7. Mustererkennungsverfahren mit den durch einen Rechner durchgeführten Schritten:
Berechnen innerer Produkte eines Eingangsmusters, dessen Kategorie unbekannt ist, und orthogonalisierter Wörterbuchfolgen einer Vielzahl von Bezugsmustern, deren Kategorien bekannt sind,
nichtlineares Umsetzen der inneren Produkte, die in dem Berechnungsschritt berechnet sind, gemäß einer positiv-negativ-symmetrischen nichtlinearen Funktion,
Berechnen von Bewertungswerten auf der Grundlage der nichtlinear umgesetzten Werte durch den Umsetzungsschritt und Koeffizienten, die in Einheiten von Kategorien voreingestellt sind,

Vergleichen der durch den Bewertungswert-Rechenschritt erhaltenen Bewertungswerte in Einheiten von Kategorien miteinander, und

Diskriminieren einer Kategorie, zu der das Eingangsmuster gehört, auf der Grundlage von Vergleichsergebnissen des Vergleichsschrittes.

8. Verfahren nach Anspruch 7, dadurch gekennzeichnet, daß der Bewertungswert-Rechenschritt den Schritt eines Berechnens der Bewertungswerte mittels eines neuralen Netzwerkes umfaßt.

9. Verfahren nach Anspruch 7, dadurch gekennzeichnet, daß der Bewertungswert-Rechenschritt den Schritt des Berechnens der Bewertungswertemittels einer statistischen diskriminanten Funktion umfaßt.

10. Verfahren nach Anspruch 8, dadurch gekennzeichnet, daß das neurale Netzwerk eine Mehrschichtstruktur hat, und daß Berechnungen an einer untersten Schicht mit Innenprodukt-Berechnungen zwischen dem Eingangsmuster und Wörterbüchern, die durch KL-Expansion in Einheiten von Kategorien orthogonalisiert sind, ersetzt werden.

11. Verfahren nach Anspruch 9, dadurch gekennzeichnet, daß der Bewertungswert-Rechenschritt den Schritt des Berechnens der folgenden Gleichung auf der Grundlage eines mittleren Vektors und einer Kovarianz-Matrix, die zuvor aus Lerndaten in Einheiten von Kategorien erhalten ist, umfaßt, und daß der Diskriminierschritt den Schritt des Diskriminierens eines maximalen Entwicklungswertes als ein Erkennungsergebnis mittels einer Bias-Entscheidungsregel umfaßt:

$$L_{(K)} = \frac{\exp\{-(1/2) \cdot (G - \mu_K)^T R_K^{-1}(G - \mu_K)}{(2\pi)^{M/2} \cdot |R_K|^{1/2}}$$

wobei $\mu_K$ und $R_K$ jeweils den mittleren Vektor und die Kovarianz-Matrix eines aus Lerndaten erhaltenen Eingangsmusters G bedeuten, T eine Transposition oder Vertauschung anzeigt und $R_K^{-1}$ und $|R_K|$ jeweils eine inverse Matrix der Kovarianz-Matrix $R_K$ und ein Wert einer Determinanten sind.

12. Verfahren nach Anspruch 9, dadurch gekennzeichnet, daß der Bewertungswert-Rechenschritt den Schritt des Berechnens der folgenden Gleichung auf der Grundlage eines mittleren Vektors und einer zuvor aus Lerndaten in Einheiten von Kategorien erhaltenen Kovarianz-Matrix umfaßt, und daß der Diskriminierschritt den Schritt des Diskriminierens einer Kategorie mit einem Mindestabstandswert als einem Erkennungsergebnis mittels eines Maharanobis-Abstandes umfaßt:

$$M_{(K)} = (G - \mu_K)^T R_K^{-1}(G - \mu_K)$$

wobei $\mu_K$ und $R_K$ jeweils den mittleren Vektor und die Kovarianz-Matrix des aus Lerndaten erhaltenen Eingangsmusters G bedeuten, T eine Transposition bzw. Vertauschung anzeigt und $R_K^{-1}$ eine inverse Matrix der Kovarianz-Matrix $R_K$ ist.

## Revendications

1. Un système de reconnaissance de formes comportant:

des moyens à dictionnaires orthogonalisés pour mémoriser une pluralité de formes de référence dont les catégories sont connues ;

des moyens de calcul de produits internes pour calculer des produits internes d'une forme d'entrée dont la catégorie est inconnue et de la pluralité des formes de référence qui sont mémorisées dans lesdits moyens à dictionnaires orthogonalisés et dont les catégories sont connues;

des moyens de conversion pour convertir de manière non linéaire les produits internes qui sont calculés par lesdits moyens de calcul de produits internes, suivant une fonction non linéaire symétrique positif - négatif ;

des moyens de calcul de valeurs d'évaluation pour calculer des valeurs d'évaluation sur la base des valeurs converties de manière non linéaire par lesdits moyens de conversion et des coefficients qui sont préétablis en unités de catégories ;

des moyens de comparaison pour comparer les valeurs d'évaluation obtenues par lesdits moyens de calcul de valeurs d'évaluation en unités de catégories les unes avec les autres ; et

des moyens de discrimination pour discriminer une catégorie à laquelle appartient la forme d'entrée sur la base des résultats de comparaison desdits moyens de comparaison.

2. Un système selon la revendication 1, caractérisé en ce que lesdits moyens de calcul de valeurs d'évaluation calculent les valeurs d'évaluation en utilisant un réseau neural.

3. Un système selon la revendication 1, caractérisé en ce que lesdits moyens de calcul de valeurs d'évaluation calculent les valeurs d'évaluation en utilisant une fonction à discriminant statistique.

4. Un système selon la revendication 2, caractérisé en ce que ledit réseau neural présente une structure multicouches,
et les calculs à la ccuche la plus inférieure sont remplacés par des calculs de produits internes entre la forme d'entrée et les dictionnaires orthogonalisés par expansion KL en unités de catégories.

5. Un système selon la revendication 3, caractérisé en ce que lesdits moyens de calcul de valeurs d'évaluation calculent l'équation suivante sur la base d'un vecteur moyen et d'une matrice de covariance résultant par avance de données d'enseignement en unités de catégories, et lesdits moyens de discrimination discriminent une valeur d'évaluation maximum en tant que résultat de reconnaissance en utilisant une règle de décision de Bayes :

$$L_{(K)} = \frac{\exp\{-(1/2)\cdot(G - \mu_K)^T R_K^{-1}(G - \mu_K)\}}{(2\pi)^{M/2.}|R_K|^{1/2}}$$

dans laquelle $\mu_K$ et $R_K$ sont respectivement le vecteur moyen et la matrice de covariance d'une forme d'entrée G résultant de données d'enseignement, T indique une transposition, et $R_K^{-1}$ et $|R_K|$ sont respectivement une matrice inverse de la matrice de covariance $R_K$ et une valeur d'un déterminant.

6. Un système selon la revendication 3, caractérisé en ce que lesdits moyens de calcul de valeurs d'évaluation calculent l'équation suivante sur la base d'un vecteur moyen et d'une matrice de covariance résultant par avance de données d'enseignement en unités de catégories, et lesdits moyens de discrimination discriminent une catégorie présentant une valeur de distance minimum en tant que résultat de reconnaissance en utilisant une distance de Maharanobis :

$$M_{(K)} = (G - \mu_K)^T R_K^{-1}(G - \mu_K)$$

dans laquelle $\mu_K$ et $R_K$ sont respectivement le vecteur moyen et la matrice de covariance d'une forme d'entrée G résultant de données d'enseignement, T indique une transposition, et $R_K^{-1}$ est une matrice inverse de la matrice de covariance $R_K$.

7. Un procédé de reconnaissance de formes comportant les phases exécutées par un ordinateur et consistant à :
calculer des produits internes d'une forme d'entrée dont la catégorie est inconnue et d'ensembles de dictionnaires orthogonalisés d'une pluralité de formes de référence dont les catégories sont connues ;
convertir de manière non linéaire les produits internes, qui sont calculés dans la phase de calcul, suivant une fonction non linéaire symétrique positif-négatif ;
calculer des valeurs d'évaluation sur la base des valeurs converties de manière non linéaire par la phase de conversion et des coefficients qui sont préétablis en unités de catégories ;
comparer les valeurs d'évaluation obtenues par la phase de calcul de valeurs d'évaluation en unités de catégories les unes avec les autres ; et
discriminer une catégorie à laquelle appartient la forme d'entrée sur la base des résultats de comparaison de la phase de comparaison.

8. Un procédé selon la revendication 7, caractérisé en ce que la phase de calcul de valeurs d'évaluation comporte la phase consistant à calculer les valeurs d'évaluation en utilisant un réseau neural.

9. Un procédé selon la revendication 7, caractérisé en ce que la phase de calcul de valeurs d'évaluation comporte la phase consistant à calculer les valeurs d'évaluation en utilisant une fonction à discriminant statistique.

10. Un procédé selon la revendication 8, caractérisé en ce que ledit réseau neural présente une structure multicouches, et les calculs pour la couche la plus inférieure sont remplacés par des calculs de produits internes entre la forme d'entrée et les dictionnaires orthogonalisés par expansion KL en unités de catégories.

11. Un procédé selon la revendication 9, caractérisé en ce que la phase de calcul de valeurs d'évaluation comporte la phase consistant à calculer l'équation suivante sur la base d'un vecteur moyen et d'une matrice de covariance résultant par avance de données d'enseignement en unités de catégories, et la phase de discrimination comporte la phase consistant à discriminer une valeur d'évaluation maximum en tant que résultat de reconnaissance en utilisant une règle de décision de Bayes :

$$L_{(K)} = \frac{\exp\{-(1/2)\cdot(G - {}_\mu K)^T R_K^{-1(G - \mu_K)}\}}{(2\pi)^{M/2.} |\ RK\ |^{1/2}}$$

dans laquelle $\mu_K$ et $R_K$ sont respectivement le vecteur moyen et la matrice de covariance d'une forme d'entrée G résultant de données d'enseignement, T indique une transposition, et $R_K^{-1}$ et $|R_K|$ sont respectivement une matrice inverse de la matrice de covariance $R_K$ et une valeur d'un déterminant.

12. Un procédé selon la revendication 9, caractérisé en ce que la phase de calcul de valeurs d'évaluation comporte la phase consistant à calculer l'équation suivante sur la base d'un vecteur moyen et d'une matrice de covariance résultant par avance de données d'enseignement en unités de catégories, et la phase de discrimination comporte la phase consistant à discriminer une catégorie présentant une valeur de distance minimum en tant que résultat de reconnaissance en utilisant une distance de Maharanobis :

$$M_{(K)} = (G - \mu_K)^{T_{R_K}-1} (G - \mu_K)$$

dans laquelle $\mu_K$ et $R^K$ sont respectivement le vecteur moyen et la matrice de covariance d'une forme d'entrée G résultant de données d'enseignement, T indique une transposition, et $R_K^{-1}$ est une matrice inverse de la matrice de covariance $R_k$.

F I G. 1

F I G. 2A

F I G. 2B

F I G. 2C

F I G. 2D

OUTPUT
f (x)

0.5

$$f(x) = \frac{1}{1 + e^{-x}}$$

0

SUM x OF INPUT

F I G. 3

f(x)

1.0

$$f(x) = |x - \frac{\sin 2\pi x}{2\pi}|$$

$$f(x) = |x|$$

0.5

C        A        B

.1

$$f(x) = x^2$$

-1        -0.5        0        0.5        1

x

F I G. 4

14

INPUT SPEECH SIGNAL → FEATURE EXTRACTING UNIT 11 → INNER PRODUCT COMPUTING UNIT 12 ↔ ORTHOGONALIZED DICTIONARY 13

SYMMETRICAL NONLINEAR CONVERTING UNIT 14

SIMILARITY COMPUTING UNIT 15

PREDE-TERMINING SECTION 16

$S_S^{(K)}$

NEURAL NETWORK 17

$y_1^{(1)}$  $y_2^{(1)}$  $y_3^{(1)}$  $y_{M-1}^{(1)}$  $y_M^{(1)}$

$y_1^{(2)}$  $y_2^{(2)}$  $y_L^{(2)}$

$S_M^{(K)}$

DETERMINING SECTION 18

RECOGNITION OUTPUT

F I G. 5

EP 0 374 604 B1

F I G.  6

EP 0 374 604 B1

INPUT
SPEECH
SIGNAL →

FEATURE
EXTRACTING
UNIT
11

→

INNER
PRODUCT
COMPUTING
SECTION
12

⟷

ORTHOGONALIZED
DICTIONARY
13

↓

SYMMETRICAL
NONLINEAR
CONVERTING
UNIT
14

↓

STATISTICAL
DISCRIMINANT
FUNCTION
COMPUTING UNIT
19

←

COEFFICIENT
REGISTERING
UNIT
20

↓

RECOGNITION
OUTPUT

F I G.  7